# EUROPEAN PATENT SPECIFICATION

(11) **EP 1 862 509 B1**
(45) Date of publication and mention of the grant of the patent: **27.02.2013**
(21) Application number: 05781395.8
(22) Date of filing: 02.09.2005
(51) Int. Cl.: C08L 101/00, C08K 3/00, C08L 1/00, C08L 101/16, D21J 1/00

(54) **ECOLOGICALLY SOUND COMPOSITION, ECOLOGICALLY SOUND MOLDED ARTICLE, AND PROCESS FOR MANUFACTURING THE COMPOSITION**
ÖKOLOGISCH UNBEDENKLICHE ZUSAMMENSETZUNG, ÖKOLOGISCH UNBEDENKLICHER FORMKÖRPER, UND VERFAHREN ZUR HERSTELLUNG DER ZUSAMMENSETZUNG
COMPOSITION ECOLOGIQUE, ARTICLE ECOLOGIQUE MOULÉ, ET PROCÉDÉ DE FABRICATION DE LA COMPOSITION

(30) Priority: 23.03.2005 JP 2005083994
(43) Date of publication of application: 05.12.2007
(73) Proprietor: Hokuetsu Kishu Paper Co., Ltd., Nagaoka-shi Niigata 940-0027 (JP)
(72) Inventor: ONOZUKA, Katsumi c/o HOKUETSU PAPER MILLS, LTD., Niigata 9400027 (JP); KAZUMORI, Yasuji c/o HOKUETSU PAPER MILLS, LTD., Niigata 9400027 (JP)
(74) Representative: Prinz & Partner
(86) International application number: PCT/JP2005/016129
(87) International publication number: WO 2006/100793

(56) References cited:
- WO-A1-2004/069550
- JP-A- 10 323 810
- JP-A- 11 293 124
- JP-A- 2001 181 511
- JP-A- 2003 184 303
- JP-A- 2005 060 556
- US-B1- 6 494 991

## Description

The present invention relates to an ecologically sound paper-resin composition using the finely cut paper product. More specifically, this finely cut paper product is a product having an improved workability when the product is compounded into a resin. The paper-resin composition, into which the finely cut paper product is incorporated, is of an ecologically sound type, and further has quality equivalent to that of conventional resin compositions. The invention also relates to a paper-resin composition which is used to give a molded product which turns yellow less and causes the generation of an odor to be decreased.

### Background Art

Conventionally, resin compositions comprising various synthetic resins, and various molded products made by use thereof have been produced and used in many amounts. About molded products using some resin, such as polyester resin, the collection, regeneration, and reuse thereof have been advancing. However, under the present circumstances, many resin molded products are incinerated or disposed of as incombustibles. When the resin compositions are incinerated, there are caused problems that incinerators are damaged since high calories are generated when the compositions are incinerated, and other problems.

As ways for solving the problems, attention is paid to a composition into which not only a synthetic resin but also wood flour or a finely cut paper product as a filler are incorporated (see, for example, Patent Document 1) and use of a biodegradable resin, which can be naturally degraded, instead of a synthetic resin (see, for example, Patent Document 2) under a situation that high care is taken of the environment. These ways have been partially put into practical use.

Compositions comprising a natural fiber and a resin are known, and various suggestions have been made. However, there are not a very large number of examples wherein the structure of a natural fiber material to be used, in particular, that of a paper or pulp pulverized product is specified. As a technique wherein a fiber material for being blended with resin is specified, use of a pulverized product of paper or pulp wherein the amount of chlorine-containing materials is made as small as possible is suggested (see, for example, Patent Document 3).

Patent Document 1: Japanese Patent Application Laid-open (JP-A) No. 2001-270508
Patent Document 2: JP-A No. 2002-272573
Patent Document 3: JP-A No. 2003-73988

The Japanese Patent Application JP 2001/081511 discloses a paper-containing resin composition for making molded products. The paper-resin composition comprises a powder blend formed of hardwood pulp or softwood pulp as the raw material, where the particle diameter of the powder is between 50 and 200 µm. The pulp employed as a raw material preferably has a lignin content of less than 1 %. The disclosed paper-resin composition also includes a high combustion heat ingredient in the form of a thermoplastic synthetic resin. The paper content of the paper-resin composition is in the range of 50 to 70 %, the remainder being the synthetic resin.

However, the most serious problem at the time of using a paper or pulp pulverized product as a fiber material for being blended with resin is that the pulverized product becomes very bulky with ease. When the bulky pulverized product is mixed with and kneaded into a resin having a relatively high bulk specific gravity, the pulverized product damages work efficiency and production efficiency remarkably. Thus, a pulverized product having a higher bulk specific gravity is desired.

When a resin is blended with a finely cut paper product, the fluidity thereof becomes lower as the proportion of the finely cut paper product becomes higher. It becomes therefore difficult that.the blend of 50% or more by mass thereof, by which the resultant will belong to the category of paper, is attained. For this reason, finely cut paper products having a good fluidity are desired.

However, suggestions are hardly known about technical means making it possible to attain these two objects at the same time.

Moreover, a problem of the composition made of a synthetic resin and wood flour is that when high temperature heat is applied thereto, the wood flour gets discolored so that a white composition is not easily produced.

In the case that paper is used instead of wood flour, discoloration can be considerably restrained when the paper is woodfree paper, wherein bleached chemical pulp is used. Thus, a white paper-resin composition can be obtained. In the case that brightness is further required, titanium oxide or calcium carbonate is usually blended therewith. According to these countermeasures, yellowing in the appearance can be decreased to such an extent that attention is hardly paid to yellowing. However, it was found out that when water splashes the paper-resin composition or the molded product, there is generated a phenomenon that the region where the water splashes turns yellow locally. The mechanism is not necessarily evident. The inventors have examined the mechanism. As a result, it has been proved that the phenomenon is caused by a water-soluble colored component in the paper-resin composition is extracted into a water layer adhering on the surface thereof, and this component originates from the paper in use. When such a phenomenon is caused, the quality and the appearance of the molded product are remarkably damaged. Thus, it is desired to develop a paper-resin composition which does not turn yellow even if the composition is splashed by water or is immersed into water. However, no literatures are found in which yellowing of paper-resin compositions, in particular, a yellowing phenomenon in which water is involved is specifically discussed.

Depending on the paper used, not only yellowing but also an odor may be generated. There is a problem that heat, which is present when the composition is molded, causes the generation of an odor and the odor remains in the molded product on occasion. It has been desired to solve this problem.

Thus, a first object of the present invention is to provide a finely cut paper product exhibiting a good workability in the production of a paper-resin composition comprising a mixture of a resin and a natural fiber, and improve the fluidity of an ecologically sound paper-resin composition using the finely cut paper product, so as to improve the moldability thereof when the composition is subjected to a processing such as injection molding. When this object is attained, the blending ratio of the finely cut paper product can be made high.

A second object of the invention is to provide an ecologically sound paper-resin composition that contains paper but causes a remarkable decrease of yellowing based on heat in the step of processing the composition, in particular, yellowing in which water is involved, and that simultaneously restrains the generation of odor.

A third object of the invention is to provide an ecologically sound molded article which uses the above-mentioned ecologically sound paper-resin composition.

The inventors have made eager investigations about relationship between the composition of paper used in a finely cut paper product and relationship between the composition and the workability when the product is mixed with a resin or the quality of the paper-resin composition. As a result, it has been found out that the above-mentioned objects can be simultaneously attained by selecting a paper species having a specified composition.

The finely cut paper product for use in mixing with resin preferably comprises one or more selected from calcium carbonate and talc as the inorganic filler. The product has a high brightness. Thus, a bad effect imparted onto the lifespan of the blade of any pulverizer is small.

The finely cut paper product for use in mixing with resin preferably has an apparent bulk specific gravity of 0.1 or more, so that the work efficiency for compounding the product into a resin becomes good.

According to the present invention an ecologically sound paper-resin composition as defined in claim 1.

The ecologically sound paper-resin composition according to the invention comprises a biodegradable resin and a rosin-based resin. The fluidity of the composition is improved, so that softness can be imparted thereto.

An ecologically sound molded article is provided according to the invention as defined in claim 4 and is molded by use of the above-mentioned ecologically sound paper-resin composition. A process for manufacturing the composition is provided as defined in claim 5.

The finely cut paper product is good in workability in the production of a paper-resin composition comprising a mixture of a resin and a natural fiber. The ecologically sound paper-resin composition using this finely cut paper product is good in fluidity, and is good in moldability when the composition is subjected to a processing such as injection molding. Moreover, the blending ratio of the finely cut paper product in the ecologically sound paper-resin composition can be made high. In the ecologically sound paper-resin composition of the invention, yellowing due to heat in the step of working the resin, in particular, yellowing in which water is involved is remarkably less, although the composition contains paper. Simultaneously, the composition is restrained from generating odor. The ecologically sound molded product of the invention, using the ecologically sound paper-resin composition, contains paper; however, yellowing is less caused, in particular, yellowing is less caused even when water splashes the molded product. Simultaneously, odor is less generated therefrom. As a result, the product can be applied to the field of food.

Embodiments of the present invention will be described in detail hereinafter. However, the invention is not interpreted so as to be limited to the description.

The finely cut paper product for use in mixing with resin is obtained by pulverizing neutral or alkaline pigment-free coated paper which comprises 70 to 90% by mass of hardwood bleached chemical pulp, 0 to 15% by mass of softwood bleached chemical pulp, and 10 to 15% by mass of an inorganic filler, and has an ISO brightness of 70% or more. In the invention, the pigment-free coated paper is coated paper which does not contain any pigment in its coated layer, or uncoated paper.

The paper used in the invention is any paper classified into the so-called woodfree paper or waste paper thereof, or may be any pulp sheet (hereinafter, these paper species will be collectively called "paper"). The pulp which constitutes the paper used in the invention needs to be bleached chemical pulp. The bleached chemical pulp is not particularly limited in the kind thereof, and may be bleached sulfite pulp or bleached kraft pulp, known by the name of BSP or BKP, respectively. Using unbleached chemical pulp is avoided. Using mechanical pulp or semichemical pulp even if the pulp is bleached is also avoided. Using waste paper from paper containing such pulp, which is classified to wood containing paper is also avoided. Known examples of the mechanical pulp include GP, TMP, CTMP, and bleached pulps thereof. In unbleached pulp, mechanical pulp, and semichemical pulp, lignin remains in a remarkable amount; even when the brightness of the finely cut paper product and the paper-resin composition is high, lignin causes yellowing or an odor in subsequent steps.

The fiber which constitutes bleached chemical pulp is very important. It is more preferred that the fiber length is shorter. Ordinarily-used fiber is hardwood fiber. The blending ratio of the hardwood bleached chemical pulp used in the invention in the paper is indispensably at least 70% or more by mass, more preferably 80% or more by mass. The blending ratio is desirably higher. If the ratio is less than 70% by mass, there are caused problems that the bulk specific gravity increases and the strength of the mixture with the resin decreases, and other problems although the effect of the pulp is varied in accordance with the constituent material of the balance. Softwood fiber, which generally has a longer fiber length than hardwood fiber, is incorporated into paper in order to give strength to the paper. However, it is more preferred the proportion of softwood fiber, that is, softwood bleached chemical pulp in the invention is smaller. The blending ratio thereof in the paper is at most 15%. If the ratio is more, the bulk specific gravity of the finely cut paper product is small so that the kneading-workability into the resin deteriorates. Thus, the fluidity of the resultant paper-resin composition also decreases.

It is necessary that the blending ratio of the inorganic filler in the paper is 10 to 15%. If the ratio is larger, the strength of the paper-resin composition decreases and further a bad effect is imparted to the lifespan of the blade of any pulverizer. The kind of the used inorganic filler is preferably at least one selected from calcium carbonate and talc from the viewpoint of the brightness thereof and the lifespan of the blade. The use of calcium carbonate is preferred since neutral paper is obtained even if no pH-adjustment with a chemical is performed. The kind of the calcium carbonate is more preferably light calcium carbonate from the viewpoint of the wear characteristics thereof. An advantage of the use of talc is that talc is excellent in wear characteristics. These fillers may be used alone or in a mixture form. The incorporation of an inorganic filler other than these fillers causes no problem if the amount thereof is small. It is however preferred to use a filler without causing bad effect to wear characteristics of any pulverizer.

The paper may contain additives such as a paper strength additive, a sizing agent, a retention aid, and a drainage aids to such an extent that the advantageous effects of the invention are not hindered. The paper may be surface-treated with various starches or a surface sizing agent, by means of a size press, a gate roll or some other device.

The brightness of the paper needs to be an ISO brightness of 70% or more. If the brightness is lower than 70%, yellowing based on water is caused. The ISO brightness is more preferably 75% or more. As the brightness is higher, a more preferred result is obtained. If the brightness of the paper itself is low, it is impossible to avoid a problem of yellowing based on water even if a manner for raising the brightness, such as addition of a highly white filler, is performed in a subsequent production of a paper-resin composition.

The paper used is neutral or alkaline pigment-free coated paper. If the paper is acidic, at the time of molding the paper-resin composition, a bad effect, such as corrosion of the mold, may be produced onto the molding. If pigment coated paper is used, synthetic binders, in particular, various latexes used in its coated layer cause the generation of a bad odor or a harmful gas when the paper is heated.

The apparent bulk specific gravity of the finely cut paper product obtained by pulverizing the above-specified paper is preferably 0.1 or more. When the above-mentioned paper is used, a finely cut paper product having an apparent bulk specific gravity of 0.1 can be obtained with relative ease by controlling conditions for the pulverization. If the apparent bulk specific gravity is less than 0.1, the workability may decrease remarkably when the finely cut paper product is compounded into a resin.

The finely cut paper product is kneaded into one or more of various resins, whereby the product is turned into a paper-resin composition. According to the invention a biodegradable resin is used and, an ecologically sound paper-resin composition is obtained.

Examples of the biodegradable resin used in the invention include polylactic acid based, polybutylene succinate based, polyvinyl alcohol based, and acetylcellulose based biodegradable resins. These may be used alone or in a mixture form.

The paper-resin composition is a composition made mainly of the finely cut paper product and a biodegradable resin, the blending ratio for making the composition into an ecologically sound type is not limited since the two are both biodegradable. When the total amount of the biodegradable resin and a natural organic material is 50% or more by mass, the composition is in conformity with "GREEN PLA", which is institutionalized by the Biodegradable Plastics Society. When the biodegradable resin is polylactic acid, the use of the blend of the resin with the finely cut paper product makes it possible to expect an advantageous effect that the tensile strength, the flexural modulus and the thermal deformation temperature of the injection-molded product are made better than for the use of polylactic acid alone. Actually, the blending ratio of the finely cut paper product to the biodegradable resin is decided, considering the moldability and the quality required for the molded product. The ratio of the finely cut paper product/the biodegradable resin ranges from 20/80% by mass to 70/30% by mass. In the same manner as described above, the aids or the white filler may be appropriately used.

According to the invention, a rosin based resin is added to the finely cut paper product and the biodegradable resin. Then the fluidity of the paper-resin composition is improved and further softness can be imparted thereto. Examples of the rosin based resin that can be used include gum rosin, wood rosin, tall oil rosin, and derivatives thereof. Examples of the derivatives include derivatives subjected to various stabilizing treatments, esterifying treatments, and purifying treatments. Particularly preferred is a rosin ester obtained by causing a rosin to react with various alcohols. Examples of the rosin ester include polymerized rosin glycerin ester, tall oil rosin glycerin ester, wood rosin glycerin ester, part ially-hydrogenated gum wood rosin glycerin ester, wood rosin pentaerythritol ester, partially-hydrogenated rosin methyl ester, and partially-dimerized rosin glycerin ester.

In this case, the blending ratio of the rosin based resin in the paper-resin composition is from 1 to 15% by mass. If the ratio is less than 1% by mass, the fluidity-improving effect or the softening effect is insufficient. If the ratio is more than 15% by mass, the heat resistance may be deteriorated.

The process for producing the paper-resin composition of the invention may be a method known in the prior art. For example, the finely cut paper product and the biodegradable resin are weighed to set the ratio therebetween to a predetermined ratio. Thereafter, the components are uniformly mixed by a Henschel mixer. This is made into a homogeneous form at a temperature of 100 to 200°C by a kneading machine. Thereafter, the resultant is continuously supplied into a feeder of an extruder if necessary. In this way, the blend is preferably made into pellets and granulated.

A molded product made from the paper-resin composition is obtained by molding the paper-resin composition made into a pellet form by the same plastic resin molding method as known in the prior art. The molded product obtained by molding the ecologically sound paper-resin composition of the invention is, for example, a cup, a dish, a tray for food, a bowl, a comb, a winding bobbin, a hanger, a calendar holder, and a toothbrush.

### Examples and comparative examples

The invention will be more specifically described by the following examples; however, the invention is not limited to these examples. In the examples, the word "part(s)" and the symbol "%" represent "part(s) by mass" and "% by mass", respectively unless otherwise specified. Comparative examples using a synthetic resin instead of a biodegradable resin are also given.

### (Comparative Example CI)

Uncoated neutral woodfree paper containing 90% by mass of hardwood bleached kraft pulp (LBKP) and 10% by mass of talc (trade name: TALC KB, manufactured by Kamitalc Co.) and having an ISO brightness of 80% was pulverized with a pulverizing device (CS CUTTER, manufactured by Condux Co.), and the resultant was caused to pass through a 100-mesh screen, thereby yielding a finely cut paper product of Example 1. The apparent bul k specific gravity of the finely cut paper product was 0.15. Next, to 100 parts by mass of the finely cut paper product were added 5 parts by mass of titanium oxide (trade name: TIPAQUE A-220, manufactured by Ishihara Sangyo Kaisha, Ltd.) as a white filler, 5 parts by mass of a modified polypropylene (PP) resin (trade name: YOUMEX 1010, manufactured by San Nopco, Ltd.), and 90 parts by mass of a polypropylene (PP) resin (trade name: J-3054HP, manufactured by Idemitsu Petrochemical Co., Ltd. Now, Idemitsu Kosan Co., Ltd.), and then the components were uniformly mixed with each other by a Henschel mixer. Thereafter, the resultant was charged into an extruder so as to be made into pellets. In this way, a paper-resin composition of Example 1 was obtained. Apart of this paper-resin composition was used, and an injection molding machine was used to produce an injection-molded product for evaluation at a cylinder-set temperature of 180°C.

### (Comparative Example C2)

A finely cut paper product and a paper-resin composition of Example 2 were obtained in the same way as in Example 1 except that there was used uncoated neutral woodfree paper containing 80 % by mass of hardwood bleached kraft pulp (LBKP), 10 % by mass of softwood bleached kraft pulp (NBKP) and 10 % by mass of calcium carbonate (trade name: TP121, manufactured by Okutama Kogyo Co., Ltd.) as a filler and having an ISO brightness of 83% and the paper was pulverized. The apparent bulk specific gravity of the finely cut paper product was 0.12. A part of this paper-resin composition was used to produce an injection-molded product for evaluation in the same way as in Example 1.

### (Comparative Example C3)

A finely cut paper product and a paper-resin composition of Example 3 were obtained in the same way as in Example 1 except that there was used uncoated neutral woodfree paper containing 70 % by mass of hardwood bleached kraft pulp (LBKP), 15 % by mass of softwood bleached kraft pulp (NBKP) and 15 % by mass of calcium carbonate (trade name: TP121, manufactured by Okutama Kogyo Co., Ltd.) as a filler and having an ISO brightness of 85% and the paper was pulverized. The apparent bulk specific gravity of the finely cut paper product was 0.11. A part of this paper-resin composition was used to produce an injection-molded product for evaluation in the same way as in Example 1.

### (Comparative Example C4)

To 100 parts by mass of the finely cut paper product obtained in Example 1 were added 5 parts by mass of titanium oxide (trade name: TIPAQUE A-220, manufactured by Ishihara Sangyo Kaisha, Ltd.) as a white filler, and 200 parts by mass of polylactic acid (PLA) (trade name: LACEA H-100, manufactured by Mitsui Chemicals, Inc.) as a biodegradable resin, and then the components were uniformly mixed by a Henschel mixer. Thereafter, the resultant was charged into an extruder so as to be made into pellets. In this way, a paper-resin composition of Example 4 was obtained. A part of this paper-resin composition was used to produce an injection-molded product for evaluation in the same way as in Example 1. The example does not contain a rosin-based resin.

### (Comparative Example C5)

A paper-resin composition of Example 5 was obtained in the same way as in Example 4 except that the finely cut paper product of Example 2 was used as a finely cut paper product. A part of this paper-resin composition was used to produce an injection-molded product for evaluation in the same way as in Example 1. The example does not contain a rosin-based resin,

### (Comparative Example C6)

A paper-resin composition of Example 6 was obtained in the same way as in Example 4 except that the finely cut paper product of Example 3 was used as a finely cut paper product. A part of this paper-resin composition was used to produce an injection-molded product for evaluation in the same way as in Example 1.

### (Example 7)

To 100 parts by mass of the finely cut paper product obtained in Example 1 were added 5 parts by mass of titanium oxide (trade name: TIPAQUE A-220, manufactured by Ishihara Sangyo Kaisha, Ltd.) as a white filler, 20 parts by mass of a rosin ester (trade name: LACTCIZER GP2001, manufactured by Arakawa Chemical Industries, Ltd.) and 180 parts by mass of polylactic acid (PLA) (tradename: LACEAH-100, manufactured by Mitsui Chemicals, Inc.) as a biodegradable resin, and then the components were uniformly mixed by a Henschel mixer. Thereafter, the resultant was charged into an extruder so as to be made into pellets. In this way, a paper-resin composition of Example 7 was obtained. A part of this paper-resin composition was used to produce an injection-molded product for evaluation in the same way as in Example 1.

### (Example 8)

A paper-resin composition of Example 8 was obtained in the same way as in Example 7 except that the finely cut paper product of Example 2 was used as a finely cut paper product. A part of this paper-resin composition was used to produce an injection-molded product for evaluation in the same way as in Example 1.

### (Example 9)

A paper-resin composition of Example 9 was obtained in the same way as in Example 7 except that the finely cut paper product of Example 3 was used as a finely cut paper product. A part of this paper-resin composition was used to produce an injection-molded product for evaluation in the same way as in Example 1.

### (Comparative Example 1)

A finely cut paper product and a paper-resin composition of Comparative Example 1 were obtained in the same way as in Example 1 except that there was used uncoated neutral woodfree paper containing 60% by mass of hardwood bleached kraft pulp (LBKP), 30% by mass of softwood bleached kraft pulp (NBKP) and 10% by mass of talc (trade name: TALC KB, manufactured by Kamitalc Co.) as a filler and having an ISO brightness of 80% and the paper was pulverized. The apparent bulk specific gravity of the finely cut paper product was 0.08. A part of this paper-resin composition was used to produce an injection-molded product for evaluation in the same way as in Example 1.

### (Comparative Example 2)

A finely cut paper product and a paper-resin composition of Comparative Example 2 were obtained in the same way as in Example 1 except that there was used uncoated neutral woodfree paper containing 80% by mass of hardwood bleached kraft pulp (LBKP), 10% by mass of groundwood pulp (GP), and 10% by mass of talc (trade name: TALC KB, manufactured by Kamitalc Co.) as a filler and having an ISO brightness of 70% and the paper was pulverized. The apparent bulk specific gravity of the finely cut paper product was 0.12. A part of this paper-resin composition was used to produce an injection-molded product for evaluation in the same way as in Example 1.

### (Comparative Example 3)

A finely cut paper product and a paper-resin composition of Comparative Example 3 were obtained in the same way as in Example 1 except that there was used uncoated neutral woodfree paper containing 60% by mass of hardwood bleached kraft pulp (LBKP), 30% by mass of groundwood pulp (GP), and 10% by mass of calcium carbonate (trade name: TP121, manufactured by Okutama Kogyo Co. , Ltd.) as a filler and having an ISO brightness of 64% and the paper was pulverized. The apparent bulk specific gravity of the finely cut paper product was 0.11. A part of this paper-resin composition was used to produce an inj ection-molded product for evaluation in the same way as in Example 1.

### (Comparative Example 4)

A finely cut paper product and a paper-resin composition of Comparative Example 4 were obtained in the same way as in Example 1 except that there was used coated paper having a pigment-coated layer on a base paper containing 90% by mass of hardwood bleached kraft pulp (LBKP) and 10% by mass of talc (trade name: TALC KB, manufactured by Kamitalc Co.) as a filler and having an ISO brightness of 78% and the paper was pulverized. The apparent bulk specific gravity of the finely cut paper product was 0. 15. A part of this paper-resin composition was used to produce an injection-molded product for evaluation in the same way as in Example 1.

### (Comparative Example 5)

A finely cut paper product and a paper-resin composition of Comparative Example 5 were obtained in the same way as in Example 1 except that waste newspaper was used and the paper was pulveri zed. The apparent bulk specific gravity of the finely cut paper product was 0.08. A part of this paper-resin composition was used to produce an injection-molded product for evaluation in the same way as in Example 1.

The papers used in Examples C1 to C6 and Comparative Examples 1 to 5, finely cut paper products and the paper-resin compositions yielded therein were evaluated by methods described below. The results are shown in Table 1.

### <ISO brightness >

It was measured with a PF-10 manufactured by Nippon Denshoku Industries Co., Ltd. The method for operating the device was in accordance with the manufacturer's operation manual, and the measurement was made in accordance with JIS P 8148:2001 "Paper, board and pulps -Measurement of diffuse blue reflectance factor(ISO brightness)".

### <Apparent bulk specific gravity>

Each of the resultant finely cut paper products was put into a 2-liter measuring cylinder, and the mass thereof was measured. The mass per unit volume was then calculated.

### <MFR (Melt Flow Rate)>

It was measured in accordance with ASTM D 1238-98 "Standard Test Method for Flow Rates of Thermoplastics by Extrusion Plastometer" under the following conditions: the unit of g/10-minutes, test temperature = 190°C, and test load = 10 kg.

### <Kneading-Workability>

The mixing evenness obtained by the Henschel mixer was evaluated according to the following criterion:
x: Uneven stirring was observed with the naked eye.
O: Good stirring was observed with the naked eye.

### <Formation of Test Piece>

Each multi-purpose test piece (JIS K 7139 A-model) and each plate, 80 × 80 × 3 (mm) in thickness, were formed by means of an F85 manufactured by Glockner Co.

### <Color of Injected Molded Plate>

The molded plate, 80 × 80 × 3 (mm) in thickness, was judged in accordance with the following criterion on the basis of feeling obtained by seeing it with the naked eye:
xx: Clearly yellowish
x: Slightly yellowish
O: Non-yellowish, and good

### <Injection Molding Odor>

Odor from the molded plate, 80 × 80 × 3 (mm) in thickness, was judged in accordance with the following criterion:
xx: A paper-burnt odor, and an offensive odor originating from a latex-decomposed gas were generated.
×: A paper-burnt odor was slightly generated.
O: No odor was favorably generated.

### <Injection molding water yellowing>

Into 30 ml of distilled water were immersed 50 g of an injection molded product cut off from the molded plate, 80 × 80 × 3 (mm) in thickness, and then the product was kept at 35°C for 2 days. Thereafter, the water was filtered, and the degree of coloring of the water phase was evaluated on the basis of feeling obtained by seeing the water with the naked eye. The evaluation by the feeling was judged according to the following criterion:
xx: Yellow
x: Light yellow
O: Colorlessness

### <Tensile Strength>

Measured in accordance with JIS K 7162 "Plastics Determination of tensile properties-Part 2 : Test conditions for moulding and extrusion plastics".

### <Bending Strength>

Measured in accordance with JIS K 7171 "Plastics -Determination of flexural properties".

### <Flexural Modulus>

Measured in accordance with JIS K 7171 "Plastics -Determination of flexural properties".

### <IZOD (Izod Impact Test)>

Measured in accordance with JIS K 7110 "Plastics -Determination of Izod impact strength" (without any notch).

### <HDT (Heat Distortion Temperature)>

Measured in accordance with JIS K 7191-2 "Plastics -Determination of temperature of deflection under load-Part 2 : Plastics and ebonite".

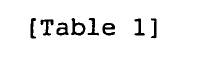

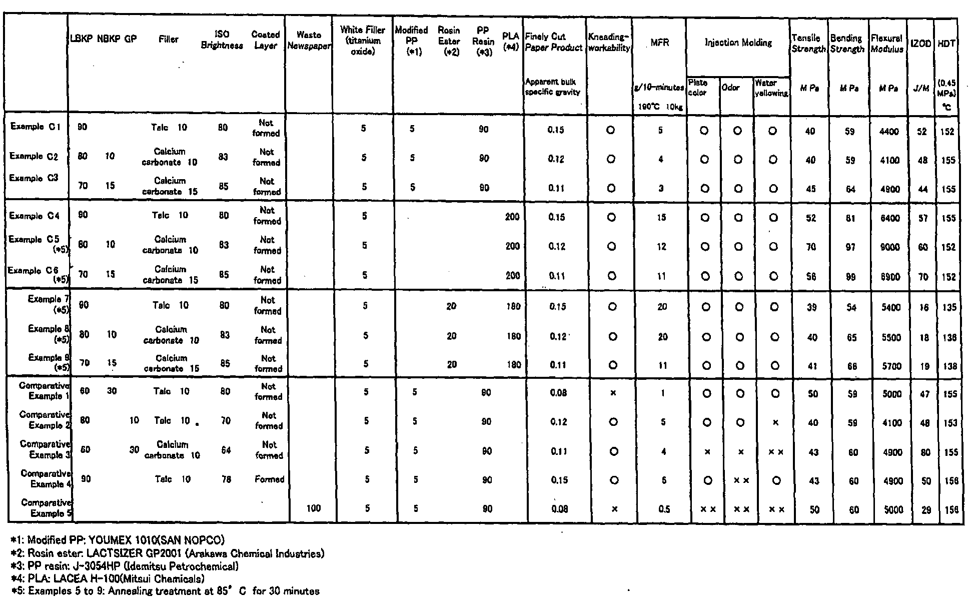

In Comparative Example 1, paper wherein the percent content of the LBKP was small was used; thus, the apparent bulk specific gravity was small and the kneading-workability was poor. In Comparative Example 2, paper containing GP was used; thus, slightly yellowing was generated by water although the ISO brightness of the paper was high. InComparative Example 3, paper containing a larger amount of the GP than in Comparative Example 2 was used; thus, the ISO brightness was low and the plate color was yellowish, and further yellowing based water was generated. Furthermore, a paper-burnt odor was slightly felt when the composition was molded. In Comparative Example 4, paper having the pigment-coated layer was used; thus, a paper-burnt odor and an offensive odor originating from a latex decomposed gas were felt when the composition was molded. In Comparative Example 5, waste newspaper was used; thus, the kneading-workability was poor, the plate color was clearly yellowish, and yellowing based on water was generated.

On the other hand, as is evident form the results in Table 1, in each of Examples 1 to 9, a finely cut paper product is obtained which is good in workability when a paper-resin composition made of a mixture of a resin and a natural fiber is produced. In an ecologically sound paper-resin composition using the finely cut paper product, the fluidity is improved, and the moldability is improved when the composition is subjected to a processing such as injection molding. On the basis of these results, the blending ratio of the finely cut paper product can be made as high as 50% or more by mass. As a result, a paper-resin composition more friendly with the environment can be produced. It is also possible to yield an ecologically sound paper-resin composition which contains a finely cut paper product but causes a remarkable decrease of yellowing based on heat in a processing step, in particular, yellowing in which water is involved, and simultaneously restrains the generation of odor. For example, the composition can be applied to the field of food; thus, the commercial value of the composition is increased.

## Claims

1. An ecologically sound paper-resin composition comprising a finely cut paper product mixed with a resin, the paper product being obtained by pulverizing woodfree neutral or alkaline pigment-free coated paper
wherein the woodfree paper comprises 70 to 90 % by mass of hardwood bleached chemical pulp, 0 to 15 % by mass of softwood bleached chemical pulp and 10 to 15 % by mass of an inorganic filler, and the paper has an ISO brightness of 70 % or more, and
wherein the resin is a biodegradable resin, and the ratio of finely cut paper product to biodegradable resin ranges from 20 to 80 % by mass to 70 to 30 % **by** mass, and
wherein the composition further comprises a rosin-based resin in an amount of 1% to 15% by mass, based on the total composition.

2. The ecologically sound paper-resin composition of claim 1, wherein the inorganic filler comprises calcium carbonate and/or talc.

3. The ecololgically sound paper resin composition of claim 1 or 2, wherein the paper product has an apparent bulk specific gravity of 0.1 or more.

4. An ecologically sound molded article, obtained by molding the ecologically sound paper-resin composition according to any one of claims 1 to 3 into an article.

5. A process for manufacturing an ecologically sound paper-resin composition comprising the steps of:
pulverizing woodfree, neutral or alkaline pigment-free coated paper to obtain a finely cut paper product for use in mixing with resin, wherein the woodfree paper comprises 70 to 90 % by mass of hardwood bleached chemical pulp, 0 to 15 % by mass of softwood bleached chemical pulp and 10 to 15 % by mass of an inorganic filler, and the paper has an ISO brightness of 70 % or more,
kneading a mixture comprising the finely cut paper product and a biodegradable resin, wherein the ratio of the finely cut paper product to the biodegradable resin ranges from 20 to 80 % by mass to 70 to 30 % by mass, and
adding a rosin-based resin to said mixture present in an amount of 1 % to 15% by mass, based on the total composition, and kneading the combined mixture to obtain the ecologically sound paper-resin composition.

## Patentansprüche

1. Ökologisch unbedenkliche Papier-Harzzusammensetzung, die ein fein geschnittenes, mit einem Harz vermischtes Papiererzeugnis umfasst, wobei das Papiererzeugnis durch Pulverisieren von holzfreiem, von neutralem oder basischem Pigment freiem beschichtetem Papier gewonnen wird,
wobei das holzfreie Papier 70 bis 90 Masseprozent gebleichten Zellstoff aus Hartholz, 0 bis 15 Masseprozent gebleichten Zellstoff aus Weichholz und 10 bis 15 Masseprozent eines anorganischen Füllstoffs umfasst und das Papier einen ISO-Weißgehalt von 70 % oder mehr aufweist, und
wobei das Harz ein biologisch abbaubares Harz ist und das Verhältnis von fein geschnittenem Papiererzeugnis zu biologisch abbaubarem Harz im Bereich von 20 bis 80 Masseprozent bis 70 bis 30 Masseprozent liegt, und
wobei die Zusammensetzung ferner ein Harz auf Kolophoniumbasis in einer Menge von 1 bis 15 Masseprozent bezogen auf die Gesamtzusammensetzung umfasst.

2. Ökologisch unbedenkliche Papier-Harzzusammensetzung nach Anspruch 1, bei der der anorganische Füllstoff Calciumcarbonat und/oder Talkum umfasst.

3. Ökologisch unbedenkliche Papier-Harzzusammensetzung nach Anspruch 1 oder 2, bei der das Papiererzeugnis eine scheinbare Fülldichte von 0,1 oder mehr hat.

4. Ökologisch unbedenkliches Formteil, erhalten durch Formen der ökologisch unbedenklichen Papier-Harzzusammensetzung nach einem der Ansprüche 1 bis 3 zu einem Gegenstand.

5. Verfahren zur Herstellung einer ökologisch unbedenklichen Papier-Harzzusammensetzung, das die folgenden Schritte umfasst:
Pulverisieren von holzfreiem, von neutralem oder basischem Pigment freiem beschichtetem Papier zur Gewinnung eines fein geschnittenen Papiererzeugnisses zur Verwendung beim Mischen mit Harz, wobei das holzfreie Papier 70 bis 90 Masseprozent gebleichten Zellstoff aus Hartholz, 0 bis 15 Masseprozent gebleichten Zellstoff aus Weichholz und 10 bis 15 Masseprozent eines anorganischen Füllstoffs umfasst und das Papier einen ISO-Weißgehalt von 70 % oder mehr aufweist,
Kneten eines Gemischs, das das fein geschnittene Papiererzeugnis und ein biologisch abbaubares Harz umfasst, wobei das Verhältnis des fein geschnittenen Papiererzeugnisses zu dem biologisch abbaubaren Harz im Bereich von 20 bis 80 Masseprozent bis 70 bis 30 Masseprozent liegt, und
Zusetzen eines Harzes auf Kolophoniumbasis, das in einer Menge von 1 bis 15 Masseprozent bezogen auf die Gesamtzusammensetzung vorliegt, zu dem Gemisch, und Kneten des kombinierten Gemischs zur Gewinnung der ökologisch unbedenklichen Papier-Harzzusammensetzung.

## Revendications

1. Composition de papier et de résine respectueuse de l'écologie, comprenant un produit en papier finement coupé mélangé avec une résine, le produit en papier étant obtenu en pulvérisant du papier couché sans bois neutre ou alcalin exempt de pigment,
le papier sans bois comprenant de 70 à 90 % en masse de pâte chimique blanchie de bois dur, de 0 à 15 % en masse de pâte chimique blanchie de bois tendre, et de 10 à 15 % en masse d'une matière de remplissage inorganique, et le papier présentant un degré de blanc ISO d'au moins 70 %, et
la résine étant une résine biodégradable et le rapport entre le produit en papier finement coupé et la résine biodégradable étant dans une plage de 20 à 80 % en masse à 70 à 30 % en masse, et
la composition comprenant en outre une résine à base de colophane dans une quantité de 1 % à 15 % en masse par rapport à la composition totale.

2. Composition de papier et de résine respectueuse de l'écologie selon la revendication 1, la matière de remplissage inorganique comprenant du carbonate de calcium et/ou du talc.

3. Composition de papier et de résine respectueuse de l'écologie selon la revendication 1 ou 2, le produit en papier présentant une densité apparente d'au moins 0,1.

4. Pièce moulée respectueuse de l'écologie, laquelle est obtenue par moulage en un article de la composition de papier et de résine respectueuse de l'écologie selon l'une des revendications 1 à 3.

5. Procédé de fabrication d'une composition de papier et de résine respectueuse de l'écologie, comportant les étapes suivantes :
pulvérisation de papier couché sans bois neutre ou alcalin exempt de pigment pour obtenir un produit en papier finement coupé pour l'utilisation lors du mélange avec de la résine, le papier sans bois comprenant de 70 à 90 % en masse de pâte chimique blanchie de bois dur, de 0 à 15 % en masse de pâte chimique blanchie de bois tendre, et de 10 à 15 % en masse d'une matière de remplissage inorganique, et le papier présentant un degré de blanc ISO d'au moins 70 %,
malaxage d'un mélange comprenant le produit en papier finement coupé et une résine biodégradable, le rapport entre le produit en papier finement coupé et la résine biodégradable étant dans une plage de 20 à 80 % en masse à 70 à 30 % en masse, et
ajout d'une résine à base de colophane au mélange, présente dans une quantité de 1 % à 15 % en masse par rapport à la composition totale, et malaxage du mélange combiné pour obtenir la composition de papier et de résine respectueuse de l'écologie.
